# EUROPEAN PATENT SPECIFICATION

(11) **EP 1 272 275 B1**
(45) Date of publication and mention of the grant of the patent: **19.11.2003**
(21) Application number: 00963191.2
(22) Date of filing: 05.09.2000
(51) Int. Cl.: B01L 7/00, F25B 29/00

(54) **A CLIMATIC TEST CHAMBER SYSTEM AND A METHOD FOR THE OPERATION THEREOF**
EIN KLIMAPRÜFKAMMER-SYSTEM UND VERFAHREN ZUM BETREIBEN DAFÜR
SYSTEME DE CHAMBRE D'ESSAIS CLIMATIQUES, ET PROCEDE DE FONCTIONNEMENT CORRESPONDANT

(30) Priority: 16.09.1999 SE 9903327
(43) Date of publication of application: 08.01.2003
(73) Proprietor: Mirai Electronics AB, 261 31 Landskrona (SE)
(72) Inventor: FRÄNNHAGEN, Björn, S-261 31 Landskrona (SE); DALMYR, Lars, SE-211 30 Malmö (SE)
(74) Representative: Petri, Stellan
(86) International application number: SE0001698
(87) International publication number: WO01019519

(56) References cited:
- EP-A2- 0 344 397
- US-A- 4 911 230
- US-A- 5 226 472

## Description

### Technical Field

The present invention relates to a climatic test chamber system comprising a cooling unit and a chamber unit, having a test chamber.

The invention also relates to a method of providing a climatic test of a plurality of items, wherein refrigerating means are provided for refrigerating a secondary refrigerant.

### Background of the Invention

Climatic tests concerning extreme limits of high and low temperatures are of great importance for estimating and evaluating the effect of storing, transporting and ageing of different kind of items and products, for example batteries, mobile telephones, electromechanical components, plastic components, raw materials etc.

A climatic test chamber system for testing such items and products, under controlled temperature conditions, conventionally comprises a single, isolated test chamber, having refrigerating means mounted adjacently to the test chamber. In such test chambers it is desirable to obtain rapid changes of temperature, which may occur within a broad temperature range, e g from -80° C to +180° C. Different systems are known for such climatic tests. For example, an ordinary cooling circuit comprising a tube, a condenser, an expansion valve, an evaporator and a compressor can be used, wherein a primary refrigerant circulates for refrigerating the test chamber air. The test chamber further comprises a resistive heating element, which is electrically actuated for heating the air in the test chamber, and a fan for circulating the air. The cooling media for cooling the condenser is usually air and the primary refrigerant may be a standard fluid such as R502, R22 or R13. The refrigerating means are activated as soon as a need for cooling appears.

A problem with a single-chamber test system is however that it is very time-consuming to finish a test of a complete product or series of similar articles. It is possible to slightly shorten the time if several apparatuses are available, a solution that however is not satisfactory from an economical point of view.

Regarding the environment it is important to take into account that several apparatuses would produce a considerably high temperature and a high noise-level in the test room. Furthermore, standard fluids such as R502, R22 or R13 as primary refrigerant are very ecologically harmful, and if several apparatuses are used the amount of primary refrigerant will be considerably high.

Another drawback with a single-chamber test system is the stress and hence worn out components because of the rapid alterations from heating to cooling. Especially the compressor will be negatively effected since the operation thereof is very irregular depending on continuous starts and stops.

### Summary of the Invention

The object of the present invention is to remedy the drawbacks above and to provide a climatic test chamber system, which makes it possible to simultaneously perform a plurality of individually regulated climatic tests of different kind of items, such as batteries, mobile telephones, electromechanical components, plastic components and raw materials. This object is achieved by a system having the characterizing features of claim 1.

Another object of the invention is to provide an economical and improved method for the performance of climatic tests of items of the above-mentioned kind. This object is achieved by a method having the characterizing features of claim 11.

More specifically, according to a preferred embodiment, the objects are achieved by combining a cooling unit, comprising refrigerating means for refrigerating a circulatory secondary refrigerant; a tank unit, for storing said refrigerated secondary refrigerant; a chamber unit, having a plurality of individually regulated test chambers; and external regulation and monitoring means.

Other purposes, features and advantages of the present invention will appear from the following detailed description, from the attached drawings as well as from the dependent claims.

### Brief Description of the Drawings

The invention will be described in further detail below, reference being made to the accompanying drawings, in which
Fig 1 is a schematic side view of a climatic test chamber system according to a preferred embodiment of the invention,
Fig 2 is a schematic side view of a climatic test chamber system according to an alternate embodiment of the invention,
Fig 3 is a schematic view illustrating a climatic chamber system according to the preferred embodiment of the invention, wherein the different components of each unit are shown, and
Fig 4 is a flow chart illustrating a method of providing a climatic test according to the invention.

### Detailed Description of a Preferred Embodiment

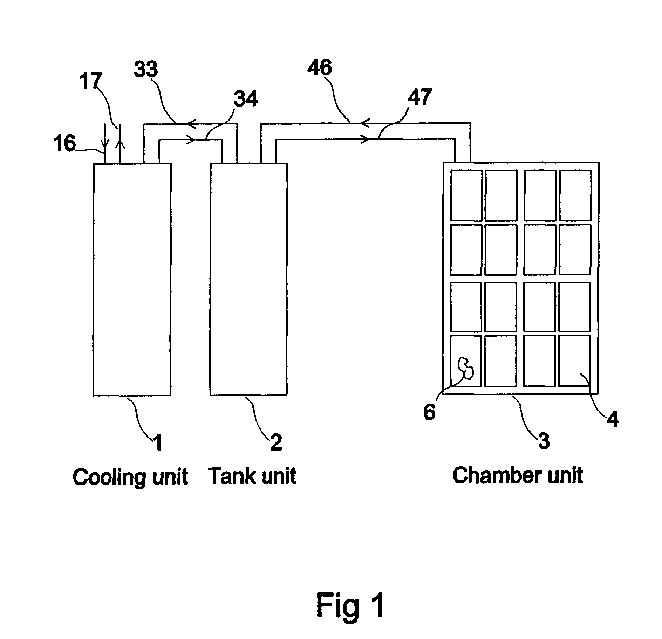

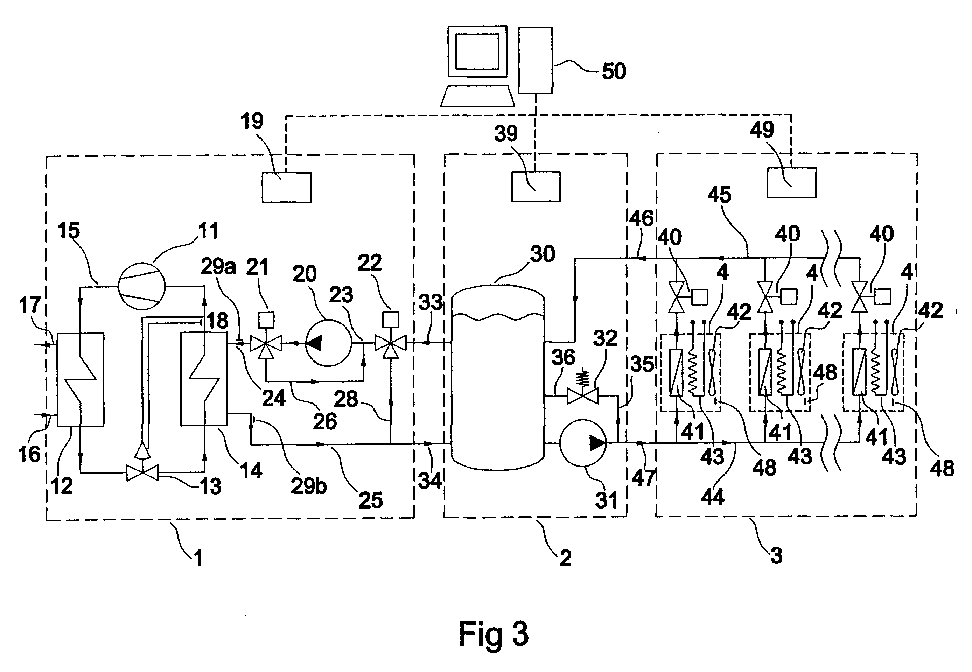

A climatic test chamber system according to the invention is schematically shown in Fig 1. The system includes a cooling unit 1, a tank unit 2 and a chamber unit 3 having a plurality of test chambers 4. The components of each unit are shown in more detail in Fig 3.

The cooling unit 1 comprises conventional refrigerating means, such as a compressor 11, a condenser 12, an expansion valve 13 and an evaporator 14, for refrigerating a primary refrigerant circulating in a tube 15 connecting said means. The primary refrigerant, which is a fluid, is compressed in the compressor 11, thus being transferred from a gas to a liquid when passing through the condenser 12, hence being cooled, and once again becomes a gas after passing the expansion valve 13. The expansion valve 13 is effected by temperature and pressure, hence those parameters being checked at an outlet 18 of the evaporator 14, as illustrated in Fig 3. This procedure is well known to a skilled person, standard components being used. The gaseous primary refrigerant receives energy from a secondary refrigerant, which will be described below, when it passes through the evaporator 14, wherein the secondary refrigerant is refrigerated. Water, preferably tap water, is used for cooling the primary refrigerant by entering an inlet 16 and passing through the condenser 12 to an outlet 17.

The primary refrigerant is preferably R404A, for example SUVA HP62 from DuPont, a standard fluid that is less environmentally harmful than others normally used for refrigeration.

The condenser 12 is preferably a plate heat exchanger, for example a brazed heat exchanger from SWEP, Sweden, or a welded heat exchanger from Vatherus, Finland.

The expansion valve 13 regulates the refrigeration circuit. The compressor 11 will however automatically be switched off by controlling means (not shown) if pressure or temperature limits are reached. The refrigerating capability of the circuit depends on the properties of the primary refrigerant as well as the choice of compressor, condenser and evaporator, respectively.

The cooling unit 1 further includes a circulation pump 20 for circulating the fluidly, secondary refrigerant through a tube 24, passing a control valve 21, through the evaporator 14, and further through a tube 25 to a tank inlet 34 of the tank unit 2 and to be stored in a tank 30. An adjustable flow pump may replace the circulation pump 20, hence eliminating the control valve 21. The secondary refrigerant is refrigerated when it passes through the evaporator 14, energy being discharged to the primary refrigerant.

The refrigerating capacity of the evaporator 14 depends on both the flow rate of the secondary refrigerant through the heat exchanger and the temperature difference between the two sides of the evaporator 14, i e between the primary and secondary refrigerant. The control valve 21 regulates the flow of the secondary refrigerant; the excess will be bypassed back to the circulation pump 20 through a tube 26 and a tube 23.

A temperature monitoring means 29b is mounted at the outlet of the evaporator 14 and is adapted to check the temperature of the refrigerated secondary refrigerant versus a set point temperature, before transfer to the tank 30 for storing. If the secondary refrigerant is not sufficiently refrigerated, i e does not achieve the set point temperature (desired temperature), it will be fed back to the evaporator 14 through a tube 28. A control valve 22 regulates the mixing ratio of the secondary refrigerant from the tube 28 and the tank outlet 33 respectively, in order to obtain a desired temperature of this refrigerant before it enters the evaporator 14.

A PLC or a microprocessor 19 mounted inside the unit regulates the total circulation.

The secondary refrigerant in the tank 30 has a temperature gradient, the lowest temperature being at the bottom and the highest temperature at the top of the tank 30. The explanation to this is that refrigerated secondary refrigerant is transferred from the cooling unit 1 to the tank 30 by the inlet 34 at the bottom of the tank, whereas used secondary refrigerant from the chamber unit 3 is transferred back to the tank 30 at the top, as will be described below.

The tank unit 2 further comprises a circulation pump 31 for transferring the refrigerated secondary refrigerant from the bottom of the tank 30 to the chamber unit 3 through a tube 47. The circulation pump 31 gives a constant flow of secondary refrigerant, and is activated as soon as at least one test chamber 4 is in use and when cooling is needed. The circulating pump 31 has the capability to simultaneously serve every test chamber 4. When only a minor amount of secondary refrigerant is required, a control valve 32 will be activated to unload the pump 31 by passing the excess of secondary refrigerant back to the tank 30 through tubes 35 and 36. An adjustable flow pump may replace the pump 31, hence eliminating the control valve 32.

The chamber unit 3 is provided with a plurality of individual test chambers 4, preferably 4-16, which are isolated from each other with foam of polyurethane. Each test chamber consists of a double steel shell forming an interspace having a heat exchanger 41, a fan 42 and a resistive heating element 43 arranged therein. A door with hinges is mounted at the front of the shell to make it possible to insert a test item into the test chamber 4.

Temperature monitoring means 48 are provided in each test chamber 4 and are connected to a controller 49, such as a PLC, for controlling the components of chamber unit 3. The controller 49 is coupled to an external control device 50, for example a microprocessor or a PC, for setting set point temperatures (desired temperatures) and duration times. The external control device 50 is also connected to the cooling unit 1, by the controller 19, for controlling and regulating the operation of the entire procedure.

After insertion of a test item into an individual test chamber 4 and setting the set point temperature and test times by means of the control device 50, several steps will follow in order to perform the climatic test.

The refrigerated secondary refrigerant, stored in the tank 30, is transferred by means of the circulation pump 31 through the tube 47 to the chamber unit 3, and further through tubes 43 and 41 to the heat exchanger 41 in the test chamber 4. It passes through the heat exchanger 41, thus cooling the air in the test chamber 4, the flow rate being regulated by a control valve 40, and flows through tubes 45 and 46 back to the top of the tank 30. The resistive heating element 43 is electrically actuated, if the temperature in the test chamber 4 is lower than the set point temperature; if it is higher, additional refrigerant is transferred to the test chamber 4, until the temperature of the test chamber has achieved the set point temperature. The fan 42 has the purpose of ensuring a uniform temperature in the entire test chamber 4 and is activated as soon as a test starts.

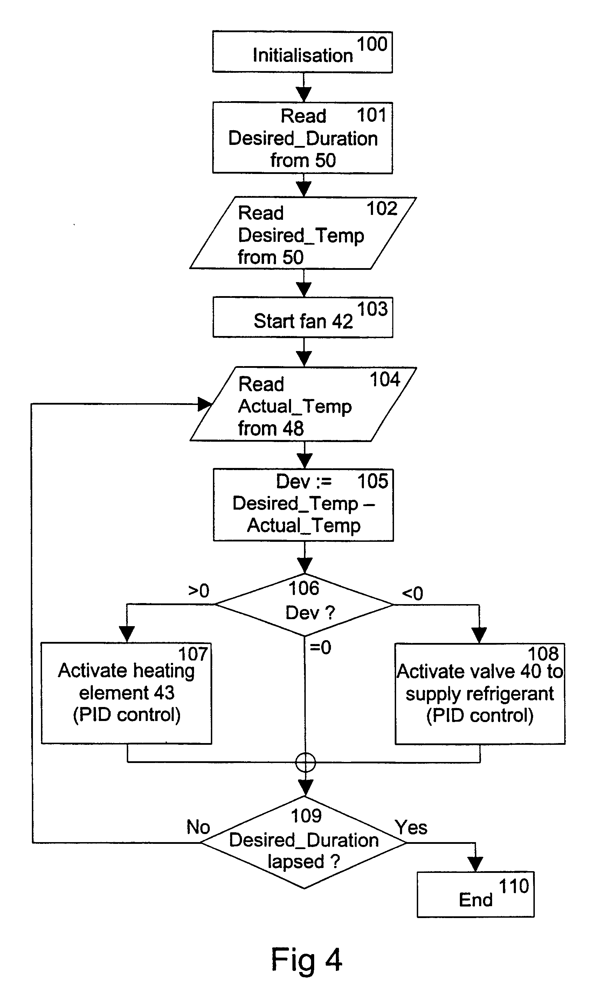

Different steps of the flow chart in Fig 4 illustrate the procedure of a climatic test in one test chamber 4. Before the test starts, it is assumed that the user has selected desired temperatures and duration times by means of the external PC 50. In the preferred embodiment, the procedure is implemented by software stored and executed by the controller 49. In a first step 100 internal registers, memories, etc. are initialised. In a second step 101 a Desired_Duration variable is read from the PC 50. In a third step 102 a Desired_Temp variable is read from the PC 50. The fan 42 is activated in a step 103 to get a uniform temperature in the test chamber 4. In a step 104 the actual temperature Actual_Temp in the test chamber 4 is read from the temperature monitoring means 48. The read actual temperature Actual_Temp is compared with the selected desired temperature Desired_Temp in a step 105. In a step 106 a decision is made regarding the next step depending on if the deviation Dev between Desired_Temp and Actual_Temp is zero, has a positive value or has a negative value. If the deviation is zero, i e the actual temperature is equal to the desired one, a step 109 follows wherein the desired duration time Desired_Duration is checked. If it has lapsed, the test is finished in a step 109, otherwise it continues and the next step will be 104 once again. If the deviation Dev has a positive value, the actual temperature is lower than the desired one, and consequently the resistive heating element 43 is electrically actuated in a step 107 to reach the desired temperature. If the deviation Dev has a negative value, the actual temperature is higher than the desired one, and consequently the control valve 40 is activated in a step 108 to supply refrigerated secondary refrigerant to the heat exchanger 41, hence cooling the air in the test chamber 4. In step 107 and 108 the regulation is performed according to a PID control algorithm, which is well known per se. The desired duration time Desired_Duration will be checked in a step 109 after the steps 107 and 108, respectively. If the time has lapsed, the test will end in a step 110; otherwise the next step will be 104 once again.

The above disclosed procedure relating to one test chamber 4 is applicable to any test chamber 4 in the climatic test chamber system according to the invention.

The physical properties of the secondary refrigerant are of vital importance regarding the lowest, achievable temperature of the air in the test chambers. By choosing a suitable fluid, e.g. an alcohol, or preferably brine, test temperatures from -40° C to +200° C may be obtained.

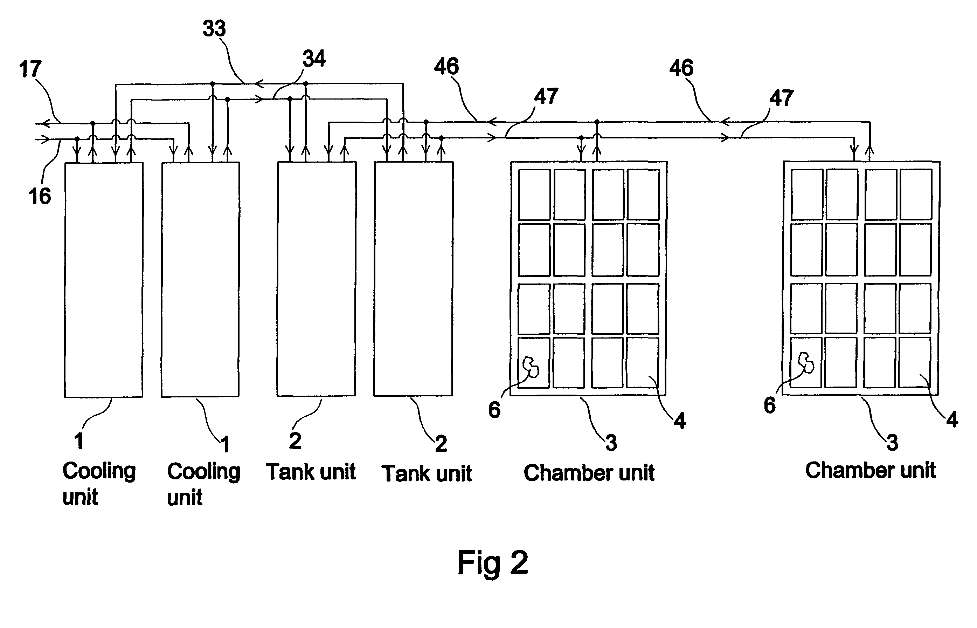

An alternate embodiment of the invention is shown in Fig 2. To get a scalable and customer adapted system it is possible according to the invention to connect at least one additional cooling unit 1', and/or at least one additional tank unit 2', and/or at least one additional chamber unit 3' to said system. This might be done if units of equal type are adjacently connected to each other, and the units are using the same inlets 17, 34, 47 and outlets 16, 33, 46, respectively, as shown in Fig 2. The compressor of each cooling unit 1 or 1' may be of different capacity; the tank units 2 and 2' may differ in size; and the individual test chambers 4 within the same unit 3 or 3' may also differ in size to get more flexibility.

The cooling unit 1 and tank unit 2 can be placed adjacently to or separately from the test chamber unit 3. Arrangement of all the units in close proximity to each other gives a straight installation. It is possible to keep the noise at a low level by using a compressor of Scroll type, also giving high capability and a long lifetime. The noise level in the test room can be minimised if the cooling unit 1 and the tank unit 2 are placed separately from the test chamber unit 3, for example in another room or preferably outdoors, hence keeping the room temperature of the test room at a decent level.

Below is a list of components for exemplifying the fabrication of various components.

### LIST OF COMPONENTS

| **No** | **Name** | **Example of fabrication** |
|---|---|---|
| 1,1' | Cooling unit | - |
| 2,2' | Tank unit | - |
| 3,3' | Chamber unit | - |
| 4 | Test chamber | - |
| 11 | Compressor | Copeland, scroll |
| 12 | Condenser | SWEP, Cetetherm, Vatherus |
| 13 | Expansion valve | Danfoss, Flica |
| 14 | Evaporator | SWEP, Cetetherm, Vatherus |
| 15 | Tube | Copper tube |
| 16 | Inlet, cooling medium | Copper tube |
| 17 | Outlet, cooling medium | Copper tube |
| 18 | Outlet of 13 | |
| 19 | Controller PLC | Siemens, Allen Bradley |
| 20 | Circulation pump | Grundfos, Wilo, Dab, Noichi |
| 21 | Three-way valve | ESBE, Honeywell |
| 22 | Three-way valve | ESBE, Honeywell |
| 23 | Tube | Copper tube |
| 24 | Inlet, secondary refrigerant | Copper tube |
| 25 | Outlet, secondary refrigerant | Copper tube |
| 26 | Bypass tube | Copper tube |
| 28 | Feedback tube | Copper tube |
| 29a | Temperature monitoring means | Pentronic, Heraeus |
| 29b | Temperature monitoring means | Pentronic, Heraeus |
| 30 | Tank, secondary refrigerant | Stainless steel |
| 31 | Circulation pump | Grundfos, Wilo, Dab, Noichi |
| 32 | Control valve | Tour Andersson, Honeywell |
| 33 | Connection tube, cooling unit inlet, tank outlet | Copper tube |
| 34 | Connection tube, cooling unit outlet, tank inlet | Copper tube |
| 36 | Bypass tube | Copper tube |
| 39 | Controller PLC | Siemens, Allen Bradley |
| 40 | Control valve | Danfoss + MMA, Honeywell |
| 41 | Heat exchanger | Stainless steel tube |
| 42 | Fan | Alcatel, Papst and Ziehl |
| 43 | Heating element (resistive) | Stainless steel tube |
| 44 | Feeding tube, cooled secondary refrigerant | Copper tube |
| 45 | Return tube, used secondary refrigerant | Copper tube |
| 46 | Connection tube, chamber unit outlet - tank inlet | Copper tube |
| 47 | Connection tube, chamber unit inlet - tank outlet | Copper tube |
| 48 | Temperature monitoring means | |
| 49 | Controller PLC | Siemens, Allen Bradley |
| 50 | Control device (PC,microcontroller) | IBM, Beijer |

## Claims

1. A climatic test chamber system comprising a cooling unit (1) and a chamber unit (3) having a test chamber (4), **characterized in**
**that** the cooling unit (1) comprises refrigerating means (11, 12, 13, 14, 15) for refrigerating a secondary refrigerant and is connected to a tank unit (2) for accumulating the secondary refrigerant, and
**that** the chamber unit (3) has at least one additional test chamber (4), the test chambers (4) being isolated from each other and provided with regulator means (40) for individually controlling the supply of the secondary refrigerant from the tank unit to each test chamber.

2. A system according to claim 1, wherein the refrigerating means include a compressor (11), a condenser (12), an expansion valve (13), and an evaporator (14).

3. A system according to claim 1 or 2, wherein each test chamber (4) has a heat exchanger (41), a fan (42), and a resistive heating element (43) to regulate the temperature of the air in the test chamber (4) to a set test temperature.

4. A system according to any preceding claim, wherein the cooling unit (1) further comprises a circulation pump (20), control valves (21, 22), and tubes (24, 25, 26, 28) for circulating the secondary refrigerant through the refrigerating means and to the tank unit (2).

5. A system according to any preceding claim, wherein the tank unit (2) comprises a tank (30) containing the secondary refrigerant having a temperature gradient, the lowest temperature being at the bottom and the highest temperature at the top of the tank (30); and a circulation pump (31) for circulating the secondary refrigerant to the chamber unit (3).

6. A system according to claims 3 and 5, wherein the test temperature in each test chamber (4) is obtained by transferring a proper amount of secondary refrigerant from the bottom of the tank (30) through tubes (47, 44) and through the heat exchanger (41) back to the top of the tank (30); by actuating the resistive heating element (43) electrically if a higher temperature is desired; and by activating the fan (42) to provide a uniform test temperature in the entire test chamber (4).

7. A system according to claim 3, wherein the heat exchanger (41) in each test chamber (4) is a finned heat exchanger.

8. A system according to any preceding claim, wherein the secondary refrigerant is a fluid, preferably a brine or an oil.

9. A system according to claim 2, wherein the primary refrigerant is a fluid.

10. A system according to any preceding claim, further **characterized by** at least one additional cooling unit (1'), and/or one additional tank unit (2') and/or one additional chamber unit (3').

11. A method of providing a climatic test of a plurality of items (6), wherein refrigerating means (11, 12, 13, 14, 15) are provided for refrigerating a secondary refrigerant, **characterized by** the steps of:
providing receptacle means (2) for storing said refrigerant;
providing a plurality of test chambers (4) for receiving a respective one of said plurality of items (6);
operatively connecting each test chamber (4) to said receptacle means (2);
providing means (40, 41, 42, 43) for individually setting a desired temperature for each test chamber (4) ;
and individually controlling an amount of said refrigerant to be supplied to each test chamber (4) in order to obtain the desired temperature thereof.

12. A method according to claim 11, further **characterized by** the steps of:
providing heating means (43) for each test chamber (4); and
individually controlling the heating means (43) of each test chamber (4) in order to obtain the desired temperature thereof.

## Patentansprüche

1. Ein Klimaprüfkammer-System mit einer Kühleinheit (1) und einer Kammereinheit (3), welche eine Prüfkammer (4) aufweist, **dadurch gekennzeichnet, daß** die Kühleinheit (1) Kühlmittel (11, 12, 13, 14, 15) umfaßt, um einen Sekundärkälteträger zu kühlen, und mit einer Tankeinheit (2) verbunden ist, um den Sekundärkälteträger zu speichern, und
daß die Kammereinheit (3) mindestens eine zusätzliche Prüfkammer (4) hat, wobei die Prüfkammern (4) von einander getrennt sind und mit Reguliermitteln (40) versehen sind, um die Zufuhr des Sekundärkälteträgers von der Tankeinheit zu der jeweiligen Prüfkammer individuell zu steuern.

2. Ein System nach Anspruch 1, wobei die Kühlmittel einen Kompressor (11), einen Kondensator (12), ein Expansionsventil (13) und einen Verdampfer (14) umfassen.

3. Ein System nach Anspruch 1 oder 2, wobei jede Prüfkammer (4) einen Wärmetauscher (41), einen Ventilator (42) und ein Widerstands-Heizelement (43) aufweist, um die Temperatur der Luft in der Prüfkammer (4) auf eine festgelegte Prüftemperatur einzustellen.

4. Ein System nach einem der vorhergehenden Ansprüche, wobei die Kühleinheit (1) weiter eine Zirkulationspumpe (20), Steuerventile (21, 22) und Rohre (24, 25, 26, 28) umfaßt, um den Sekundärkälteträger durch die Kühlmittel und die Tankeinheit (2) umlaufen zu lassen.

5. Ein System nach einem der vorhergehenden Ansprüche, wobei die Tankeinheit (2) einen Tank (30), welcher den Sekundärkälteträger beinhaltet, und der einen Temperaturgradient aufweist, wobei die niedrigste Temperatur an dem Boden und die höchste Temperatur an dem Deckel des Tankes (30) ist; und eine zirkulationspumpe (31), um den Sekundärkälteträger in der Kammereinheit (3) umlaufen zu lassen, aufweist.

6. Ein System nach den Ansprüchen 3 und 5, wobei die Prüftemperatur in jeder Prüfkammer (4) durch Übertragung einer geeigneten Menge des Sekundärkälteträgers vom Boden des Tankes (30) durch Rohre (47, 44) und durch den Wärmetauscher (41) zurück zu dem Deckel des Tanks (30) erreicht wird; durch elektrisches Betätigen des Widerstands-Heizelements (43), wenn eine höhere Temperatur gewünscht ist; und durch Betätigung des Ventilators (42), um eine einheitliche Prüftemperatur in der gesamten Prüfkammer (4) zu schaffen.

7. Ein System nach Anspruch 3, wobei der Wärmetauscher (41) in jeder Prüfkammer (4) ein Lamellenwärmetauscher ist.

8. Ein System nach einem der vorhergehenden Ansprüche, wobei der Sekundärkälteträger ein Fluid, vorzugsweise eine Salzlauge oder ein Öl, ist.

9. Ein System nach Anspruch 2, wobei der Primärkälteträger ein Fluid ist.

10. Ein System nach einem der vorhergehenden Ansprüche, weiterhin **gekennzeichnet durch** mindestens eine zusätzliche Kühleinheit (1') und/oder eine zusätzliche Tankeinheit (2') und/oder eine zusätzliche Kammereinheit (3').

11. Ein Verfahren zur Durchführung einer Klimaprüfung von einer Vielzahl von Punkten (6), wobei Kühlmittel (11, 12, 13, 14, 15) vorgesehen sind, um einen Sekundärkälteträger zu kühlen, **gekennzeichnet durch** die Schritte, daß
Behältermittel (2) vorgesehen werden, um den Kälteträger zu speichern;
eine Vielzahl von Prüfkammern (4) vorgesehen werden, um jeweils einen der Vielzahl von Punkten (6) zu erhalten;
jede Prüfkammer (4) mit den Behältermitteln (2) operativ verbunden werden;
Mittel (40, 41, 42, 43) vorgesehen werden, um eine gewünschte Temperatur für jede Prüfkammer (4) individuell festzusetzen;
und eine zu jeder Prüfkammer (4) zuzuführende Menge des Kälteträgers individuell gesteuert wird, um darin die gewünschte Temperatur zu erhalten.

12. Ein Verfahren nach Anspruch 11, weiter **gekennzeichnet durch** die Schritte:
Heizmittel (43) für jede Prüfkammer (4) vorzusehen; und
die Heizmittel (43) einer jeden Prüfkammer (4) individuell zu steuern, um die darin gewünschte Temperatur zu erhalten.

## Revendications

1. Système de chambre d'essais climatiques comprenant une unité de refroidissement (1) et une unité de chambres (3) ayant une chambre d'essais (4), **caractérisé en ce que**
l'unité de refroidissement (1) comprend des moyens de réfrigération ( 11, 12, 13, 14, 15) pour réfrigérer un réfrigérant secondaire et est connectée à une unité de réservoir (2) pour accumuler le réfrigérant secondaire, et **en ce que**
l'unité de chambres (3) a au moins une chambre d'essais (4) supplémentaire, les chambres d'essais (4) étant isolées entre elles et dotées d'un moyen de régulation (40) pour contrôler individuellement l'alimentation en réfrigérant secondaire de l'unité de réservoir vers chaque chambre d'essais.

2. Système selon la revendication 1, dans lequel le moyen de réfrigération comprend un compresseur (11), un condenseur (12), une soupape de détente (13) et un évaporateur (14).

3. Système selon la revendication 1 ou 2, dans lequel chaque chambre d'essais (4) a un échangeur de chaleur (41), un ventilateur (42) et un élément de chauffage résistant (43) pour amener la température de l'air dans la chambre d'essais (4) à une température d'essai définie.

4. Système selon une quelconque des revendications précédentes, dans lequel l'unité de refroidissement (1) comprend en outre une pompe de circulation (20), des soupapes de commande (21, 22) et des tubes (24, 25, 26, 28) pour faire circuler le réfrigérant secondaire dans le moyen de réfrigération et vers l'unité de réservoir (2).

5. Système selon une quelconque des revendications précédentes, dans lequel l'unité de réservoir (2) comprend un réservoir (30) contenant le réfrigérant secondaire doté d'un gradient de température, la température inférieure étant au fond et la température supérieure au sommet du réservoir (30), et une pompe de circulation (31) pour faire circuler le réfrigérant secondaire vers l'unité de chambres (3).

6. Système selon les revendications 3 et 5, dans lequel la température d'essai dans chaque chambre d'essais (4) est obtenue en transférant une quantité appropriée de réfrigérant secondaire du fond du réservoir (30) via des tubes (47, 44) et via l'échangeur de chaleur (41) au sommet du réservoir (30), en activant l'élément de chauffage résistant (43) électriquement si une température plus élevée est désirée, et en activant le ventilateur (42) pour obtenir une température d'essai uniforme dans la totalité de la chambre d'essais (4).

7. Système selon la revendication 3, dans lequel l'échangeur de chaleur (41) dans chaque chambre d'essais (4) est un échangeur de chaleur à ailettes.

8. Système selon l'une quelconque des revendications précédentes, dans lequel le réfrigérant secondaire est un fluide, de préférence une saumure ou une huile.

9. Système selon la revendication 2, dans lequel le réfrigérant primaire est un fluide.

10. Système selon l'une quelconque des revendications précédentes, **caractérisé en outre par** au moins une unité de refroidissement supplémentaire (1') et/ou une unité de réservoir supplémentaire (2') et/ou une unité de chambres supplémentaire (3').

11. Procédé pour effectuer un essai climatique d'une multitude d'objets (6), dans lequel des moyens de réfrigération (11, 12, 13, 14, 15) sont fournis pour réfrigérer un réfrigérant secondaire, **caractérisé par** les étapes de :
fourniture d'un récipient (2) pour stocker ledit réfrigérant,
fourniture d'une multitude de chambres d'essais (4) pour recevoir un desdits objets (6),
connexion en mode de fonctionnement de chaque chambre d'essais (4) audit récipient (2),
fourniture de moyens (40, 41, 42, 43) pour régler individuellement une température désirée pour chaque chambre d'essais (4),
et contrôle individuel d'une quantité dudit réfrigérant à fournir à chaque chambre d'essais (4) afin d'obtenir la température désirée dans celle-ci.

12. Procédé selon la revendication 11, **caractérisé en outre par** les étapes de :
fourniture d'un moyen de chauffage (43) pour chaque chambre d'essais (4), et
contrôle individuel du moyen de chauffage (43) de chaque chambre d'essais (4) afin d'obtenir la température désirée dans celle-ci.
